# EUROPEAN PATENT SPECIFICATION

(11) **EP 0 679 818 B1**
(45) Date of publication and mention of the grant of the patent: **12.01.2000**
(21) Application number: 95104504.6
(22) Date of filing: 27.03.1995
(51) Int. Cl.: F16D 69/02

(54) **Friction material**
Reibungsmaterial
Matériau de friction

(30) Priority: 28.04.1994 US 234114
(43) Date of publication of application: 02.11.1995
(73) Proprietor: NISSHINBO INDUSTRIES, INC., Chuo-ku, Tokyo 103 (JP)
(72) Inventor: Tsugawa, Kazuo, c/o Nisshinbo Ind., Inc., Adachi-ku, Tokyo 123 (JP); Suzuki, Seiji, c/o Nisshinbo Ind., Inc., Adachi-ku, Tokyo 123 (JP); Kubono, Hidekazu, c/o Nisshinbo Ind., Inc., Adachi-ku, Tokyo 123 (JP)
(74) Representative: Laufhütte, Dieter, Dr.-Ing.

(56) References cited:
- DE-A- 2 010 099
- US-A- 4 290 510
- US-A- 5 325 941
- US-A- 5 339 931

## Description

The present invention relates to a friction apparatus according to the preamble of claim 1. The invention further comprises a braking apparatus.

The invention is applicable to disc and drum brakes and to clutches in the automotive and aircraft industries, and to machine tools generally. Selections of certain combinations of additives to the friction material and to the aluminum alloy have been found to provide an excellent coefficient of friction with low rates of wear to the friction material and to the aluminum surface.

From US-A-4,290,510 a friction apparatus comprising a rotor or drum comprising an aluminum alloy having 65%-98% by volume of aluminum, and a reinforcing hard ceramic material and a friction material contacting said rotor is known.

Weight reduction is very desirable in the automotive industry and in the aircraft industry. The necessity for weight reduction in aircraft is obvious. Weight reduction in the automotive and trucking industries has become more important as the cost of fuel, the tax rate on the fuel and the stringency of environmental regulations increases. Historically, brake drums, brake rotors and flywheels have been formed of cast iron. Brake shoes, disc pads and clutches have been faced with compositions including binders, fillers, metal flakes and asbestos fibers. Various combinations have been employed to provide a suitable coefficient of friction at low temperatures while minimizing wear and fading tendencies at higher temperatures. The use of asbestos has diminished greatly in many countries as a result of environmental and occupational health regulations.

The desire to reduce unsprung weight and overall vehicle weight suggests that aluminum alloys would be a suitable substitute for cast iron. Unfortunately, aluminum alloys are softer than cast iron and the wear rates encountered when using conventional friction materials are unacceptable.

Aluminum alloys may be effectively hardened by adding particles or whiskers of ceramic materials such as SiC, Al₂O₃ or ZrO₂,but linings of the conventional type formed from a binder such as a phenolic resin, a filler such as graphite, barium sulfate, calcium carbonate and/or metal powder, and a fibrous material other than asbestos, i.e., organic fibers, glass fibers, or metallic fibers, are incompatible with the hardened aluminum alloys. Particularly, the coefficient of friction is too low or the rate of attack of the friction material on the aluminum is unacceptable. A different approach appears to be required.

It has been found that friction materials which contain certain hard inorganic materials such as metal oxides, borides, carbides, and/or nitrides, such materials having a Mohs' hardness of 8 or greater, are especially compatible with aluminum alloy metal surfaces which are hardened with certain interstitial ceramic materials. The selection of the appropriate combination of ceramic hardening agent for the aluminum alloy and hard inorganic additive to the friction material follows a semi-empirical pattern.

The friction material according to this invention is characterized in that said aluminum alloy comprises 65-98% by volume of aluminum, and 0.5-35% by volume of hard reinforcing material selected from the group consisting of Si₃N₄, TiN, TiC, Al₂O₃, SiC, ZrO₂, and SiO₂, and said friction material contains 0.1 to 30% by volume of a hard inorganic material selected from the group consisting of SiC, Al₂O₃, ZrO₂, B₄C, c-BN and WC.

Preferred embodiments are shown in the subclaims. The hard inorganic materials used in the friction material according to this invention, must have a Mohs' hardness of 8 or greater. The apparent reason for this requirement is that the hardening agents used in the compatible aluminum alloys have a comparable Mohs' hardness.

The hard inorganic material having a Mohs' hardness of 8 or more, can be a metal oxide, such as ZrO₂ or Al₂O₃, a boride such as B₄C, a carbide such as SiC or WC, a nitride, such as c-BN and mixtures thereof.

The hard inorganic material can be in the form of a powder, a particle or a whisker. Different forms are generally compatible.

The size of the hard inorganic material is preferably between 0.2 and 250 µm when the material is in the form of a powder or particle. Sizes smaller than 0.2 µm are not sufficiently abrasive and fail to provide a sufficiently high coefficient of friction. Sizes greater than 250 µm tend to be too abrasive and, more importantly, tend to gouge the surface of the aluminum material.

When the hard inorganic material is a whisker or fiber, suitable diameters are from 0.1 to 100 µm in lengths of 1 µm to 5 mm for reasons as described above.

The amount of the hard, inorganic material in the friction material is desirably about 0.1 to 30% by volume, preferably 0.5-15%. Amounts less than 0.1% do not achieve any significant improvement in the coefficient of friction. Amounts greater than 30% produce a roughness which exceeds the hardness improvement in the aluminum alloy as described below and cause excessive wear of the alloy.

The hardening or reinforcing material for the aluminum alloy is used in an amount of 35 vol% or less and, preferably, 15 to 25% vol%, and is a ceramic in the form of particles, whiskers or the like selected from Si₃N₄, TiN, TiC, Al₂O₃, SiC, ZrO₂, SiO₂ and mixtures thereof.

The construction of the aluminum alloy containing the hardening or reinforcing material begins with a conventional aluminum alloy selected from those compositions disclosed in Japanese Industrial Standards and equivalent compositions well known to those in the art. The hardening material, in the form of particles, whiskers, or powders, can be added to the molten alloy or applied by procedures suitable for introducing ceramic particles into the surface of a pre-formed blank or partially machined material. For example, particles can be introduced using a plasma torch or by application of the particles, followed by scanning the surface with a laser. The particles do not become part of a liquid solution, but remains as discrete particles entrapped in the aluminum alloy matrix. These ceramic materials are the same as, or have properties similar to, the hard, inorganic materials used in the friction material. The following Tables illustrate the materials and the relationships in terms of percent by volume which produce the compatible hardened alloys and friction materials according to this invention.

**Table 1A**

| | | | |
|---|---|---|---|
| H in AR | Si₃N₄ | Si₃N₄ | Si₃N₄ |
| | 0.5∼10 | 5∼20 | 15∼35 |
| H in FM | Sic | Sic | Sic |
| | 0.5∼10 | 3∼12 | 5∼15 |
| H in AR | Si₃N₄ | Si₃N₄ | Si₃N₄ |
| | 0.5∼10 | 5∼20 | 15∼35 |
| H in FM | Al₂O₃ | Al₂O₃ | Al₂O₃ |
| | 0.5∼10 | 3∼12 | 5∼15 |
| H in AR | Si₃N₄ | Si₃N₄ | Si₃N₄ |
| | 0.5∼10 | 5∼20 | 15∼35 |
| H in FM | ZrO₂ | ZrO₂ | ZrO₂ |
| | 1.0∼10 | 3∼12 | 5∼15 |
| H in AR | Si₃N₄ | Si₃N₄ | Si₃N₄ |
| | 0.5∼10 | 5∼20 | 15∼35 |
| H in FM | B₄C | B₄C | B₄C |
| | 0.5∼10 | 3∼12 | 5∼15 |
| H in AR | Si₃N₄ | Si₃N₄ | Si₃N₄ |
| | 0.5∼10 | 5∼20 | 15∼35 |
| H in FM | c-BN | c-BN | c-BN |
| | 0.5∼10 | 3∼12 | 5∼15 |
| H in AR | Si₃N₄ | Si₃N₄ | Si₃N₄ |
| | 0.5∼10 | 5∼20 | 15∼35 |
| H in FM | WC | WC | WC |
| | 0.5∼10 | 3∼12 | 5∼15 |

**Table 1B**

| | | | |
|---|---|---|---|
| H in AR | TiN | TiN | TiN |
| | 0.5∼10 | 5∼20 | 15∼35 |
| H in FM | Sic | Sic | Sic |
| | 0.5∼10 | 3∼12 | 5∼15 |
| H in AR | TiN | TiN | TiN |
| | 0.5∼10 | 5∼20 | 15∼35 |
| H in FM | Al₂O₃ | Al₂O₃ | Al₂O₃ |
| | 0.5∼10 | 3∼12 | 5∼15 |
| H in AR | TiN | TiN | TiN |
| | 0.5∼10 | 5∼20 | 15∼35 |
| H in FM | ZrO₂ | ZrO₂ | ZrO₂ |
| | 1.0∼10 | 3∼12 | 5∼15 |
| H in AR | TiN | TiN | TiN |
| | 0.5∼10 | 5∼20 | 15∼35 |
| H in FM | B₄C | B₄C | B₄C |
| | 0.5∼10 | 3∼12 | 5∼15 |
| H in AR | TiN | TiN | TiN |
| | 0.5∼10 | 5∼20 | 15∼35 |
| H in FM | c-BN | c-BN | c-BN |
| | 0.5∼10 | 3∼12 | 5∼15 |
| H in AR | TiN | TiN | TiN |
| | 0.5∼10 | 5∼20 | 15∼35 |
| H in FM | WC | WC | WC |
| | 0.5∼10 | 3∼12 | 5∼15 |

**Table 1C**

| | | | |
|---|---|---|---|
| H in AR | TiC | TiC | TiC |
| | 0.5∼10 | 5∼20 | 15∼35 |
| H in FM | Sic | Sic | Sic |
| | 1.0∼10 | 3∼12 | 5∼15 |
| H in AR | TiC | TiC | TiC |
| | 0.5∼10 | 5∼20 | 15∼35 |
| H in FM | Al₂O₃ | Al₂O₃ | Al₂O₃ |
| | 1.0∼10 | 3∼12 | 5∼15 |
| H in AR | TiC | TiC | TiC |
| | 0.5∼10 | 5∼20 | 15∼35 |
| H in FM | ZrO₂ | ZrO₂ | ZrO₂ |
| | 2∼10 | 4∼12 | 6∼15 |
| H in AR | TiC | TiC | TiC |
| | 0.5∼10 | 5∼20 | 15∼35 |
| H in FM | B₄C | B₄C | B₄C |
| | 1.0∼10 | 3∼12 | 5∼15 |
| H in AR | TiC | TiC | TiC |
| | 0.5∼10 | 5∼20 | 15∼35 |
| H in FM | c-BN | c-BN | c-BN |
| | 1.0∼10 | 3∼12 | 5∼15 |
| H in AR | TiC | TiC | TiC |
| | 0.5∼10 | 5∼20 | 15∼35 |
| H in FM | WC | WC | WC |
| | 1.0∼10 | 3∼12 | 5∼15 |

**Table 1D**

| | | | |
|---|---|---|---|
| H in AR | Al₂O₃ | Al₂O₃ | Al₂O₃ |
| | 0.5∼10 | 5∼20 | 15∼35 |
| H in FM | Sic | Sic | Sic |
| | 0.1∼7 | 2∼11 | 3∼12 |
| H in AR | Al₂O₃ | Al₂O₃ | Al₂O₃ |
| | 0.5∼10 | 5∼20 | 15∼35 |
| H in FM | Al₂O₃ | Al₂O₃ | Al₂O₃ |
| | 0.1∼8 | 2∼12 | 3∼15 |
| H in AR | Al₂O₃ | Al₂O₃ | Al₂O₃ |
| | 0.5∼10 | 5∼20 | 15∼35 |
| H in FM | ZrO₂ | ZrO₂ | ZrO₂ |
| | 0.5∼10 | 2∼12 | 5∼15 |
| H in AR | Al₂O₃ | Al₂O₃ | Al₂O₃ |
| | 0.5∼10 | 5∼20 | 15∼35 |
| H in FM | B₄C | B₄C | B₄C |
| | 0.1∼8 | 2∼12 | 3∼15 |
| H in AR | Al₂O₃ | Al₂O₃ | Al₂O₃ |
| | 0.5∼10 | 5∼20 | 15∼35 |
| H in FM | c-BN | c-BN | c-BN |
| | 0.1∼8 | 2∼12 | 3∼15 |
| H in AR | Al₂O₃ | Al₂O₃ | Al₂O₃ |
| | 0.5∼10 | 5∼20 | 15∼35 |
| H in FM | WC | WC | WC |
| | 0.1∼7 | 2∼11 | 3∼12 |

**Table 1E**

| | | | |
|---|---|---|---|
| H in AR | Sic | Sic | Sic |
| | 0.5∼10 | 5∼20 | 15∼35 |
| H in FM | Sic | Sic | Sic |
| | 0.1∼8 | 2∼12 | 3∼15 |
| H in AR | Sic | Sic | Sic |
| | 0.5∼10 | 5∼20 | 15∼35 |
| H in FM | Al₂O₃ | Al₂O₃ | Al₂O₃ |
| | 0.1∼8 | 2∼12 | 3∼15 |
| H in AR | Sic | Sic | Sic |
| | 0.5∼10 | 5∼20 | 15∼35 |
| H in FM | ZrO₂ | ZrO₂ | ZrO₂ |
| | 0.5∼10 | 2∼12 | 5∼15 |
| H in AR | Sic | Sic | Sic |
| | 0.5∼10 | 5∼20 | 15∼35 |
| H in FM | B₄C | B₄C | B₄C |
| | 0.1∼8 | 2∼12 | 3∼15 |
| H in AR | Sic | Sic | Sic |
| | 0.5∼10 | 5∼20 | 15∼35 |
| H in FM | c-BN | c-BN | c-BN |
| | 0.1∼8 | 2∼12 | 3∼15 |
| H in AR | Sic | Sic | Sic |
| | 0.5∼10 | 5∼20 | 15∼35 |
| H in FM | WC | WC | WC |
| | 0.1∼8 | 2∼12 | 3∼15 |

**Table 1F**

| | | | |
|---|---|---|---|
| H in AR | ZnO₂-SiO₂ | ZnO₂-SiO₂ | ZnO₂-SiO₂ |
| | 0.5∼10 | 5∼20 | 15∼35 |
| H in FM | Sic | Sic | Sic |
| | 0.1∼5 | 2∼8 | 3∼12 |
| H in AR | ZnO₂-SiO₂ | ZnO₂-SiO₂ | ZnO₂-SiO₂ |
| | 0.5∼10 | 5∼20 | 15∼35 |
| H in FM | Al₂O₃ | Al₂O₃ | Al₂O₃ |
| | 0.1∼5 | 2∼8 | 3∼12 |
| H in AR | ZnO₂-SiO₂ | ZnO₂-SiO₂ | ZnO₂-SiO₂ |
| | 0.5∼10 | 5∼20 | 15∼35 |
| H in FM | ZrO₂ | ZrO₂ | ZrO₂ |
| | 0.1∼8 | 2∼12 | 3∼15 |
| H in AR | ZnO₂-SiO₂ | ZnO₂-SiO₂ | ZnO₂-SiO₂ |
| | 0.5∼10 | 5∼20 | 15∼35 |
| H in FM | B₄C | B₄C | B₄C |
| | 0.1∼5 | 2∼8 | 3∼12 |
| H in AR | ZnO₂-SiO₂ | ZnO₂-SiO₂ | ZnO₂-SiO₂ |
| | 0.5∼10 | 5∼20 | 15∼35 |
| H in FM | c-BN | c-BN | c-BN |
| | 0.1∼5 | 2∼8 | 3∼12 |
| H in AR | ZnO₂-SiO₂ | ZnO₂-SiO₂ | ZnO₂-SiO₂ |
| | 0.5∼10 | 5∼20 | 15∼35 |
| H in FM | WC | WC | WC |
| | 0.1∼5 | 2∼8 | 3∼12 |

The symbol "H in AR" indicates the hard reinforcing material and its percentage in an aluminum rotor. The symbol"H in FM" indicates the hard inorganic material and its percentage in the friction material.

The following examples illustrate the effectiveness of the disclosed invention. The examples are purely illustrative and not limitative of the scope of the invention. Modifications to the invention which are apparent to those of skill in the art are included within the scope of the invention.

### Examples 1-10 and Comparative Example 1

Friction materials of Examples 1-10 and Comparative Example 1 were produced under the following conditions.
Preliminary moldings:
   room temperature, face pressure = 400 kg/cm²
   Hot pressing:
   temp. = 150°C, pressure = 400 kg/cm², 10 minutes
   Heat treatment: 180°C x 5 hours

The obtained friction materials were subjected to a friction test using a full-size dynamometer, under the following conditions:
Test method: JASO C427-83 I = 5 kgms²
Rotor material: matrix = aluminum alloy of JIS AC8B
Reinforcing agent of rotor:
   Examples 1-5
   SiC particles of 10 µm, used in an amount of 25% by volume
   Examples 6-10

SiC particles of 30 µm, used in an amount of 15% by volume The results are shown in Table 1.

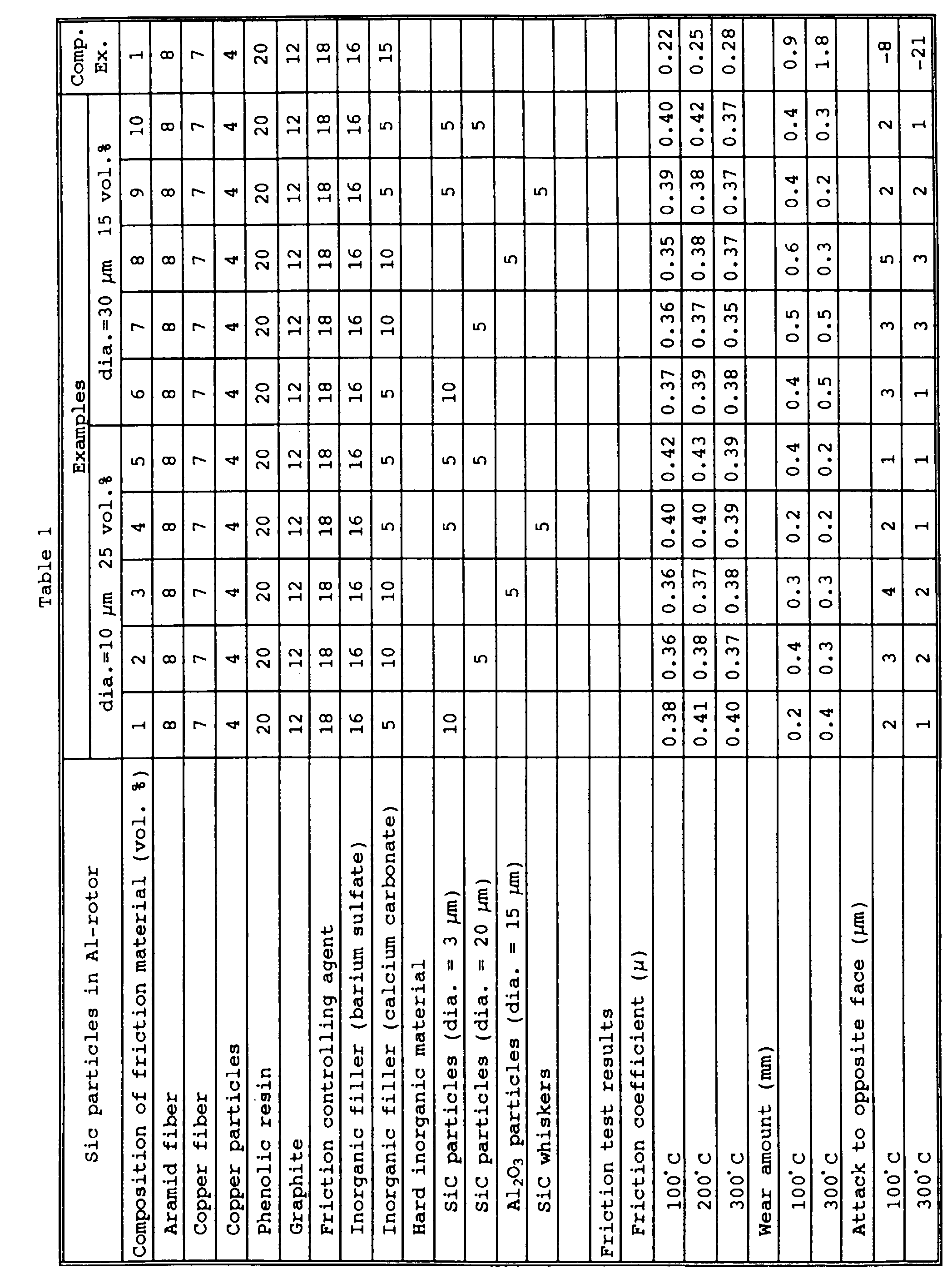

In Table 1, a minus value indicates that in the attack to the opposing face powder is generated by wear and adhered onto said opposing face.

As is clear from Table 1, the friction materials of the present invention each containing a hard inorganic material show excellent coefficients of friction and excellent wear resistance over a wide temperature range and are superior in lack of attack to the opposing face. In contrast, the friction material of Comparative Example 1 is inferior in friction coefficient and wear resistance and was ground by the opposing face.

In addition to the materials which have been described above, it is understood that friction control agents including MOS₂, Sb₂S₃, Sb₂O₃, rubber powder, graphite, pulverized nutshells, and other additives known to those skilled in the art may be employed to provide the coefficient of friction required for a particular utilization. It is likewise understood that mechanical systems not related to the transportation industry may also find the combination of specified friction material and hardened aluminum all loy suitable for their uses.

## Claims

1. A friction apparatus comprising
(1) a rotor or drum comprising an aluminium alloy having 65 to 98 % by volume of aluminium and at least one reinforcing hard ceramic material, and (2) a friction material contacting said rotor or drum,
characterised in that
the aluminium alloy contains 0.5 to 35 % by volume of said hard ceramic material which is selected from the group consisting of Si3N4, TiN, TiC, Al₂O₃, SiC, ZrO₂,and SiO₂, and in said friction material contains 0.1 to 30 % by volume of the hard inorganic material selected from the group consisting of SiC, Al₂O₃, ZrO₂,B₄C, c-BN and WC.

2. A friction apparatus according to claim 1, wherein said hard inorganic material contained in said friction material has the form of a powder, particle or whisker.

3. A friction apparatus according to claim 1, wherein said hard inorganic material contained in the friction material has a Mohs hardness of at least 8.

4. A friction apparatus according to claim 1, wherein the hard inorganic material contained in the friction material is SiC.

5. A friction apparatus according to claim 1, wherein the hard inorganic material contained in the friction material is Al₂O₃.

6. A friction apparatus according to claim 1, wherein the hard inorganic material in the friction material is present in an amount of 0.5 to 15 % by volume.

7. A braking apparatus comprising a rotor or drum comprising an aluminium alloy having 65-98% by volume of aluminium and at least one reinforcing hard ceramic material, and a stator for friction coupling with said rotor and having an outer surface having a friction material thereon, characterised in that said aluminium alloy is hardened with between 0.5 volume % and 35 volume % of a material selected from the group consisting of Si₃N₄, TiN, TiC, Al₂O₃, SiC, ZrO₂, and SiO₂ and combinations thereof, the friction material contains 0.5 volume % to 15 volume % of hardening material selected from the group consisting of SiC, Al₂O₃, ZrO₂, B4C, c-BN and WC, wherein each relationship between the identity and amount in terms of volume % of a hardening agent in the rotor, H in AR, and the identity and amount in terms of volume % of a hardening material in the friction material, H in FM, is defined in Tables lA, 1B, 1C, 1D, 1E, and 1F as follows:
**TABLE 1A**
| | | | |
|---|---|---|---|
| H in AR | Si₃N₄ | Si₃N₄ | Si₃N₄ |
| | 0.5~10 | 5~20 | 15~35 |
| H in FM | SiC | SiC | SiC |
| | 0.5~10 | 3~12 | 5~15 |
| H in AR | Si₃N₄ | Si₃N₄ | Si₃N₄ |
| | 0.5~10 | 5~20 | 15~35 |
| H in FM | Al₂O₃ | Al₂O₃ | Al₂O₃ |
| | 0.5~10 | 3~12 | 5~15 |
| H in AR | Si₃N₄ | Si₃N₄ | Si₃N₄ |
| | 0.5~10 | 5~20 | 15~35 |
| H in FM | ZrO₂ | ZrO₂ | ZrO₂ |
| | 1.0~10 | 3~12 | 5~15 |
| H in AR | Si₃N₄ | Si₃N₄ | Si₃N₄ |
| | 0.5~10 | 5~20 | 15~35 |
| H in FM | B₄C | B₄C | B₄C |
| | 0.5~10 | 3~12 | 5~15 |
| H in AR | Si₃N₄ | Si₃N₄ | Si₃N₄ |
| | 0.5~10 | 5~20 | 15~35 |
| H in FM | c-BN | c-BN | c-BN |
| | 0.5~10 | 3~12 | 5~15 |
| H in AR | Si₃N₄ | Si₃N₄ | Si₃N₄ |
| | 0.5~10 | 5~20 | 15~35 |
| H in FM | WC | WC | WC |
| | 0.5~10 | 3~12 | 5~15 |
**TABLE 1B**
| | | | |
|---|---|---|---|
| H in AR | TiN | TiN | TiN |
| | 0.5~10 | 5~20 | 15~35 |
| H in FM | SiC | SiC | SiC |
| | 0.5~10 | 3~12 | 5~15 |
| H in AR | TiN | TiN | TiN |
| | 0.5~10 | 5~20 | 15~35 |
| H in FM | Al₂O₃ | Al₂O₃ | Al₂O₃ |
| | 0.5~10 | 3~12 | 5~15 |
| H in AR | TiN | TiN | TiN |
| | 0.5~10 | 5~20 | 15~35 |
| H in FM | ZrO₂ | ZrO₂ | ZrO₂ |
| | 1.0~10 | 3~12 | 5~15 |
| H in AR | TiN | TiN | TiN |
| | 0.5~10 | 5~20 | 15~35 |
| H in FM | B₄C | B₄C | B₄C |
| | 0.5~10 | 3~12 | 5~15 |
| H in AR | TiN | TiN | TiN |
| | 0.5~10 | 5~20 | 15~35 |
| H in FM | c-BN | c-BN | c-BN |
| | 0.5~10 | 3~12 | 5~15 |
| H in AR | TiN | TiN | TiN |
| | 0.5~10 | 5~20 | 15~35 |
| H in FM | WC | WC | WC |
| | 0.5~10 | 3~12 | 5~15 |
**TABLE 1C**
| | | | |
|---|---|---|---|
| H in AR | TiC | TiC | TiC |
| | 0.5~10 | 5~20 | 15~35 |
| H in FM | SiC | SiC | SiC |
| | 1.0~10 | 3~12 | 5~15 |
| H in AR | TiC | TiC | TiC |
| | 0.5~10 | 5~20 | 15~35 |
| H in FM | Al₂O₃ | Al₂O₃ | Al₂O₃ |
| | 1.0~10 | 3~12 | 5~15 |
| H in AR | TiC | TiC | TiC |
| | 0.5~10 | 5~20 | 15~35 |
| H in FM | ZrO₂ | ZrO₂ | ZrO₂ |
| | 2~10 | 4~12 | 6~15 |
| H in AR | TiC | TiC | TiC |
| | 0.5~10 | 5~20 | 15~35 |
| H in FM | B₄C | B₄C | B₄C |
| | 1.0~10 | 3~12 | 5~15 |
| H in AR | TiC | TiC | TiC |
| | 0.5~10 | 5~20 | 15~35 |
| H in FM | c-BN | c-BN | c-BN |
| | 1.0~10 | 3~12 | 5~15 |
| H in AR | TiC | TiC | TiC |
| | 0.5~10 | 5~20 | 15~35 |
| H in FM | WC | WC | WC |
| | 1.0~10 | 3~12 | 5~15 |
**TABLE 1D**
| | | | |
|---|---|---|---|
| H in AR | Al₂O₃ | Al₂O₃ | Al₂O₃ |
| | 0.5~10 | 5~20 | 15~35 |
| H in FM | SiC | SiC | SiC |
| | 0.1~7 | 2~11 | 3~12 |
| H in AR | Al₂O₃ | Al₂O₃ | Al₂O₃ |
| | 0.5~10 | 5~20 | 15~35 |
| H in FM | Al₂O₃ | Al₂O₃ | Al₂O₃ |
| | 0.1~8 | 2~12 | 3~15 |
| H in AR | Al₂O₃ | Al₂O₃ | Al₂O₃ |
| | 0.5~10 | 5~20 | 15~35 |
| H in FM | ZrO₂ | ZrO₂ | ZrO₂ |
| | 0.5~10 | 2~12 | 5~15 |
| H in AR | Al₂O₃ | Al₂O₃ | Al₂O₃ |
| | 0.5~10 | 5~20 | 15~35 |
| H in FM | B₄C | B₄C | B₄C |
| | 0.1~8 | 2~12 | 3~15 |
| H in AR | Al₂O₃ | Al₂O₃ | Al₂O₃ |
| | 0.5~10 | 5~20 | 15~35 |
| H in FM | c-BN | c-BN | c-BN |
| | 0.1~8 | 2~12 | 3~15 |
| H in AR | Al₂O₃ | Al₂O₃ | Al₂O₃ |
| | 0.5~10 | 5~20 | 15~35 |
| H in FM | WC | WC | WC |
| | 0.1~7 | 2~11 | 3~12 |
**TABLE 1E**
| | | | |
|---|---|---|---|
| H in AR | SiC | SiC | SiC |
| | 0.5~10 | 5~20 | 15~35 |
| H in FM | SiC | SiC | SiC |
| | 0.1~8 | 2~12 | 3~15 |
| H in AR | SiC | SiC | SiC |
| | 0.5~10 | 5~20 | 15~35 |
| H in FM | Al₂O₃ | Al₂O₃ | Al₂O₃ |
| | 0.1~8 | 2~12 | 3~15 |
| H in AR | SiC | SiC | SiC |
| | 0.5~10 | 5~20 | 15~35 |
| H in FM | ZrO₂ | ZrO₂ | ZrO₂ |
| | 0.5~10 | 2~12 | 5~15 |
| H in AR | SiC | SiC | SiC |
| | 0.5~10 | 5~20 | 15~35 |
| H in FM | B₄C | B₄C | B₄C |
| | 0.1~8 | 2~12 | 3~15 |
| H is AR | SiC | SiC | SiC |
| | 0.5~10 | 5~20 | 15~35 |
| H in FM | c-BN | c-BN | c-BN |
| | 0.1~8 | 2~12 | 3~15 |
| H in AR | SiC | SiC | SiC |
| | 0.5~10 | 5~20 | 15~35 |
| H in FM | WC | WC | WC |
| | 0.1~8 | 2~12 | 3~15 |
**TABLE 1F**
| | | | |
|---|---|---|---|
| H in AR | ZrO₂-SiO₂ | ZrO₂-SiO₂ | ZrO₂-SiO₂ |
| | 0.5~10 | 5~20 | 15~35 |
| H in FM | SiC | SiC | SiC |
| | 0.1~5 | 2~8 | 3~12 |
| H in AR | ZrO₂-SiO₂ | ZrO₂-SiO₂ | ZrO₂SiO₂ |
| | 0.5~10 | 5~20 | 15~35 |
| H in FM | Al₂O₃ | Al₂O₃ | Al₂O₃ |
| | 0.1~5 | 2~8 | 3~12 |
| H in AR | ZrO₂-SiO₂ | ZrO₂-SiO₂ | ZrO₂-SiO₂ |
| | 0.5~10 | 5~20 | 15~35 |
| H in FM | ZrO₂ | ZrO₂ | ZrO₂ |
| | 0.1~8 | 2~12 | 3~15 |
| H in AR | ZrO₂-SiO₂ | ZrO₂-SiO₂ | ZrO₂-SiO₂ |
| | 0.5~10 | 5~20 | 15~35 |
| H in FM | B₄C | B₄C | B₄C |
| | 0.1~5 | 2~8 | 3~12 |
| H in AR | ZrO₂-SiO₂ | ZrO₂-SiO₂ | ZrO₂-SiO₂ |
| | 0.5~10 | 5~20 | 15~35 |
| H in FM | c-BN | c-BN | c-BN |
| | 0.1~5 | 2~8 | 3~12 |
| H in AR | ZrO₂-SiO₂ | ZrO₂-SiO₂ | ZrO₂-SiO₂ |
| | 0.5~10 | 5~20 | 15~35 |
| H in FM | WC | WC | WC |
| | 0.1~5 | 2~8 | 3~12 |

8. A braking apparatus according to claim 7, wherein the aluminium alloy is hardened with 15 to 25 % by volume SiC, and the friction material contains a hard material selected from the group consisting of SiC particles, Al₂O₃, and SiC whiskers.

## Patentansprüche

1. Reibungsapparat, umfassend
(1) einen Rotor oder eine Trommel, umfassend eine Aluminiumlegierung mit 65 bis 98 Vol.-% Aluminium und mindestens einem verstärkenden hartkeramischen Material, und (2) ein Reibungsmaterial in Kontakt mit dem Rotor oder der Trommel,
dadurch gekennzeichnet, daß
die Aluminiumlegierung 0,5 bis 35 Vol.-% des hartkeramischen Materials enthält, das gewählt ist aus der Gruppe, bestehend aus Si₃N₄, TiN, TiC, Al₂O₃, SiC, ZrO₂ und SiO₂, und im Reibungsmaterial 0,1 bis 30 Vol.-% des harten anorganischen Materials enthält, gewählt aus der Gruppe, bestehend aus SiC, Al₂O₃, ZrO₂, B₄C, c-BN und WC.

2. Reibungsapparat nach Anspruch 1, wobei das im Reibungsmaterial enthaltene harte anorganische Material die Form eines Pulvers, Partikels oder Haarkristalls aufweist.

3. Reibungsapparat nach Anspruch 1, wobei das im Reibungsmaterial enthaltene harte anorganische Material eine Mohs-Härte von mindestens 8 aufweist.

4. Reibungsapparat nach Anspruch 1, wobei das im Reibungsmaterial enthaltene harte anorganische Material SiC ist.

5. Reibungsapparat nach Anspruch 1, wobei das im Reibungsmaterial enthaltene harte anorganische Material Al₂O₃ ist.

6. Reibungsapparat nach Anspruch 1, wobei das im Reibungsmaterial enthaltene harte anorganische Material in einer Menge von 0,5 bis 15 Vol.-% vorhanden ist.

7. Bremsapparat, umfassend einen Rotor oder eine Trommel, bestehend aus einer Aluminiumlegierung mit 65-98 Vol.-% Aluminium und mindestens einem verstärkenden hartkeramischen Material, und einen Ständer zur Reibungskupplung mit dem Rotor, welcher Ständer eine Außenfläche mit einem Reibungsmaterial darauf aufweist, dadurch gekennzeichnet, daß die Aluminiumlegierung mit zwischen 0,5 Vol.-% und 35 Vol.-% eines Materials gehärtet ist, gewählt aus der Gruppe, bestehend aus Si₃N₄, TiN, TiC, Al₂O₃, SiC, ZrO₂ und SiO₂ und deren Kombinationen, und das Reibungsmaterial 0,5 Vol.-% bis 15 Vol.-% an Härtungsmittel enthält, gewählt aus der Gruppe, bestehend aus SiC, Al₂O₃, ZrO₂, B₄C, c-BN und WC, wobei jede Beziehung zwischen der Identität und der Menge in Form von Volumenprozent eines Härtungsmittels im Rotor, H in Ar, und der Identität und der Menge in Form von Volumenprozent eines Härtungsmittels in Reibungsmaterial, H in FM, in Tabellen 1A, 1B, 1C, 1D, 1E und 1F wie folgt definiert ist:
**TABELLE 1A**
| | | | |
|---|---|---|---|
| H in AR | Si₃N₄ | Si₃N₄ | Si₃N₄ |
| | 0.5~10 | 5~20 | 15~35 |
| H in FM | SiC | SiC | SiC |
| | 0.5~10 | 3~12 | 5~15 |
| H in AR | Si₃N₄ | Si₃N₄ | Si₃N₄ |
| | 0.5~10 | 5~20 | 15~35 |
| H in FM | Al₂O₃ | Al₂O₃ | Al₂O₃ |
| | 0.5~10 | 3~12 | 5~15 |
| H in AR | Si₃N₄ | Si₃N₄ | Si₃N₄ |
| | 0.5~10 | 5~20 | 15~35 |
| H in FM | ZrO₂ | ZrO₂ | ZrO₂ |
| | 1.0~10 | 3~12 | 5~15 |
| H in AR | Si₃N₄ | Si₃N₄ | Si₃N₄ |
| | 0.5~10 | 5~20 | 15~35 |
| H in FM | B₄C | B₄C | B₄C |
| | 0.5~10 | 3~12 | 5~15 |
| H in AR | Si₃N₄ | Si₃N₄ | Si₃N₄ |
| | 0.5~10 | 5~20 | 15~35 |
| H in FM | c-BN | c-BN | c-BN |
| | 0.5~10 | 3~12 | 5~15 |
| H in AR | Si₃N₄ | Si₃N₄ | Si₃N₄ |
| | 0.5~10 | 5~20 | 15~35 |
| H in FM | WC | WC | WC |
| | 0.5~10 | 3~12 | 5~15 |
**TABELLE 1B**
| | | | |
|---|---|---|---|
| H in AR | TiN | TiN | TiN |
| | 0.5~10 | 5~20 | 15~35 |
| H in FM | SiC | SiC | SiC |
| | 0.5~10 | 3~12 | 5~15 |
| H in AR | TiN | TiN | TiN |
| | 0.5~10 | 5~20 | 15~35 |
| H in FM | Al₂O₃ | Al₂O₃ | Al₂O₃ |
| | 0.5~10 | 3~12 | 5~15 |
| H in AR | TiN | TiN | TiN |
| | 0.5~10 | 5~20 | 15~35 |
| H in FM | ZrO₂ | ZrO₂ | ZrO₂ |
| | 1.0~10 | 3~12 | 5~15 |
| H in AR | TiN | TiN | TiN |
| | 0.5~10 | 5~20 | 15~35 |
| H in FM | B₄C | B₄C | B₄C |
| | 0.5~10 | 3~12 | 5~15 |
| H in AR | TiN | TiN | TiN |
| | 0.5~10 | 5~20 | 15~35 |
| H in FM | c-BN | c-BN | c-BN |
| | 0.5~10 | 3~12 | 5~15 |
| H in AR | TiN | TiN | TiN |
| | 0.5~10 | 5~20 | 15~35 |
| H in FM | WC | WC | WC |
| | 0.5~10 | 3~12 | 5~15 |
**TABELLE 1C**
| | | | |
|---|---|---|---|
| H in AR | TiC | TiC | TiC |
| | 0.5~10 | 5~20 | 15~35 |
| H in FM | SiC | SiC | SiC |
| | 1.0~10 | 3~12 | 5~15 |
| H in AR | TiC | TiC | TiC |
| | 0.5~10 | 5~20 | 15~35 |
| H in FM | Al₂O₃ | Al₂O₃ | Al₂O₃ |
| | 1.0~10 | 3~12 | 5~15 |
| H in AR | TiC | TiC | TiC |
| | 0.5~10 | 5~20 | 15~35 |
| H in FM | ZrO₂ | ZrO₂ | ZrO₂ |
| | 2~10 | 4~12 | 6~15 |
| H in AR | TiC | TiC | TiC |
| | 0.5~10 | 5~20 | 15~35 |
| H in FM | B₄C | B₄C | B₄C |
| | 1.0~10 | 3~12 | 5~15 |
| H in AR | TiC | TiC | TiC |
| | 0.5~10 | 5~20 | 15~35 |
| H in FM | c-BN | c-BN | c-BN |
| | 1.0~10 | 3~12 | 5~15 |
| H in AR | TiC | TiC | TiC |
| | 0.5~10 | 5~20 | 15~35 |
| H in FM | WC | WC | WC |
| | 1.0~10 | 3~12 | 5~15 |
**TABELLE 1D**
| | | | |
|---|---|---|---|
| H in AR | Al₂O₃ | Al₂O₃ | Al₂O₃ |
| | 0.5~10 | 5~20 | 15~35 |
| H in FM | SiC | SiC | SiC |
| | 0.1~7 | 2~11 | 3~12 |
| H in AR | Al₂O₃ | Al₂O₃ | Al₂O₃ |
| | 0.5~10 | 5~20 | 15~35 |
| H in FM | Al₂O₃ | Al₂O₃ | Al₂O₃ |
| | 0.1~8 | 2~12 | 3~15 |
| H in AR | Al₂O₃ | Al₂O₃ | Al₂O₃ |
| | 0.5~10 | 5~20 | 15~35 |
| H in FM | ZrO₂ | ZrO₂ | ZrO₂ |
| | 0.5~10 | 2~12 | 5~15 |
| H in AR | Al₂O₃ | Al₂O₃ | Al₂O₃ |
| | 0.5~10 | 5~20 | 15~35 |
| H in FM | B₄C | B₄C | B₄C |
| | 0.1~8 | 2~12 | 3~15 |
| H in AR | Al₂O₃ | Al₂O₃ | Al₂O₃ |
| | 0.5~10 | 5~20 | 15~35 |
| H in FM | c-BN | c-BN | c-BN |
| | 0.1~8 | 2~12 | 3~15 |
| H in AR | Al₂O₃ | Al₂O₃ | Al₂O₃ |
| | 0.5~10 | 5~20 | 15~35 |
| H in FM | WC | WC | WC |
| | 0.1~7 | 2~11 | 3~12 |
**TABELLE 1E**
| | | | |
|---|---|---|---|
| H in AR | SiC | SiC | SiC |
| | 0.5~10 | 5~20 | 15~35 |
| H in FM | SiC | SiC | SiC |
| | 0.1~8 | 2~12 | 3~15 |
| H in AR | SiC | SiC | SiC |
| | 0.5~10 | 5~20 | 15~35 |
| H in FM | Al₂O₃ | Al₂O₃ | Al₂O₃ |
| | 0.1~8 | 2~12 | 3~15 |
| H in AR | SiC | SiC | SiC |
| | 0.5~10 | 5~20 | 15~35 |
| H in FM | ZrO₂ | ZrO₂ | ZrO₂ |
| | 0.5~10 | 2~12 | 5~15 |
| H in AR | SiC | SiC | SiC |
| | 0.5~10 | 5~20 | 15~35 |
| H in FM | B₄C | B₄C | B₄C |
| | 0.1~8 | 2~12 | 3~15 |
| H in AR | SiC | SiC | SiC |
| | 0.5~10 | 5~20 | 15~35 |
| H in FM | c-BN | c-BN | c-BN |
| | 0.1~8 | 2~12 | 3~15 |
| H in AR | SiC | SiC | SiC |
| | 0.5~10 | 5~20 | 15~35 |
| H in FM | WC | WC | WC |
| | 0.1~8 | 2~12 | 3~15 |
**TABELLE 1F**
| | | | |
|---|---|---|---|
| H in AR | ZrO₂-SiO₂ | ZrO₂-SiO₂ | ZrO₂-SiO₂ |
| | 0.5~10 | 5~20 | 15~35 |
| H in FM | SiC | SiC | SiC |
| | 0.1~5 | 2~8 | 3~12 |
| H in AR | ZrO₂-SiO₂ | ZrO₂-SiO₂ | ZrO₂-SiO₂ |
| | 0.5~10 | 5~20 | 15~35 |
| H in FM | Al₂O₃ | Al₂O₃ | Al₂O₃ |
| | 0.1~5 | 2~8 | 3~12 |
| H in AR | ZrO₂-SiO₂ | ZrO₂-SiO₂ | ZrO₂-SiO₂ |
| | 0.5~10 | 5~20 | 15~35 |
| H in FM | ZrO₂ | ZrO₂ | ZrO₂ |
| | 0.1~8 | 2~12 | 3~15 |
| H in AR | ZrO₂-SiO₂ | ZrO₂-SiO₂ | ZrO₂-SiO₂ |
| | 0.5~10 | 5~20 | 15~35 |
| H in FM | B₄C | B₄C | B₄C |
| | 0.1~5 | 2~8 | 3~12 |
| H in AR | ZrO₂-SiO₂ | ZrO₂-SiO₂ | ZrO₂-SiO₂ |
| | 0.5~10 | 5~20 | 15~35 |
| H in FM | c-BN | c-BN | c-BN |
| | 0.1~5 | 2~8 | 3~12 |
| H in AR | ZrO₂-SiO₂ | ZrO₂-SiO₂ | ZrO₂-SiO₂ |
| | 0.5~10 | 5~20 | 15~35 |
| H in FM | WC | WC | WC |
| | 0.1~5 | 2~8 | 3~12 |

8. Bremsapparat nach Anspruch 7, wobei die Aluminiumlegierung mit 15 bis 25 Vol.-% SiC gehärtet ist und das Reibungsmaterial ein Hartmaterial enthält, gewählt aus der Gruppe, bestehend aus SiC-Partikeln, Al₂O₃ und SiC-Haarkristallen.

## Revendications

1. Appareil à friction comprenant
(1) un rotor ou tambour comprenant un alliage d'aluminium ayant 65 à 98% en volume d'aluminium et au moins une matière céramique dure de renforcement, et (2) un matériau de friction contactant ledit rotor ou tambour.
caractérisé en ce que
l'alliage d'aluminium contient 0,5 à 35% en volume de ladite matière céramique dure qui est sélectionnée dans le groupe consistant en Si₃N₄, TiN, TiC, Al₂O₃, SiC, ZrO₂, et SiO₂, et en ce que ledit matériau de friction contient 0,1 à 30% en volume de la matière inorganique dure sélectionnée dans le groupe consistant en SiC, Al₂O₃, ZrO₂, B₄C, c-BN et WC.

2. Appareil à friction selon la revendication 1, où ladite matière inorganique dure contenue dans ledit matériau de friction a la forme d'une poudre, d'une particule ou d'une barbe.

3. Appareil à friction selon la revendication 1, où ladite matière inorganique dure contenue dans le matériau de friction a une dureté Mohs d'au moins 8.

4. Appareil à friction selon la revendication 1, où la matière inorganique dure contenue dans le matériau de friction est SiC.

5. Appareil à friction selon la revendication 1, où la matière inorganique dure contenue dans le matériau de friction est Al₂O₃.

6. Appareil à friction selon la revendication 1, où la matière inorganique dure dans le matériau de friction est présente en une quantité de 0,5 à 15% en volume.

7. Appareil de freinage comprenant un rotor ou tambour comprenant un alliage d'aluminium ayant 65-98% en volume d'aluminium et au moins une matière céramique dure de renforcement et un stator pour un couplage par friction avec ledit rotor et ayant une surface externe ayant un matériau de friction caractérisé en ce que ledit alliage d'aluminium est durci avec entre 0,5% en volume et 35% en volume d'un matériau sélectionné dans le groupe consistant en Si₃N₄, TiN, TiC, Al₂O₃, SiC, ZrO₂ et SiO₂ et leurs combinaisons, le matériau de friction contient 0,5% en volume à 15% en volume d'un matériau de durcissement sélectionné dans le groupe consistant en SiC, Al₂O₃, ZrO₂, B₄C, c-BN et WC, où chaque relation entre l'identité et la quantité en termes de % en volume d'un agent de durcissement dans le rotor, H dans AR, et l'identité et la quantité en termes du % en volume d'un matériau de durcissement dans le matériau de friction, H dans FM, est défini aux Tableaux 1A, 1B, lC, 1D, 1E, et 1F comme suit:
**TABLEAU 1A**
| | | | |
|---|---|---|---|
| H dans AR | Si₃N₄ | Si₃N₄ | Si₃N₄ |
| | 0,5-10 | 5-20 | 15-35 |
| H dans FM | SiC | SiC | SiC |
| | 0,5-10 | 3-12 | 5-15 |
| H dans AR | Si₃N₄ | Si₃N₄ | Si3N4 |
| | 0,5-10 | 5-20 | 15-35 |
| H dans FM | Al₂O₃ | Al₂O₃ | Al₂O₃ |
| | 0,5-10 | 3-12 | 5-15 |
| H dans AR | Si₃N₄ | Si₃N₄ | Si₃N₄ |
| | 0,5-10 | 5-20 | 15-35 |
| H dans FM | ZrO₂ | ZrO₂ | ZrO₂ |
| | 1,0-10 | 3-12 | 5-15 |
| H dans AR | Si₃N₄ | Si₃N₄ | Si₃N₄ |
| | 0,5-10 | 5-20 | 15-35 |
| H dans FM | B₄C | B₄C | B₄C |
| | 0,5-10 | 3-12 | 5-15 |
| H dans AR | Si₃N₄ | Si₃N₄ | Si₃N₄ |
| | 0,5-10 | 5-20 | 15-35 |
| H dans FM | c-BN | c-BN | c-BN |
| | 0,5-10 | 3-12 | 5-15 |
| H dans AR | Si₃N₄ | Si₃N₄ | Si₃N₄ |
| | 0,5-10 | 5-20 | 15-35 |
| H dans FM | WC | WC | WC |
| | 0,5-10 | 3-12 | 5-15 |
**TABLEAU 1B**
| | | | |
|---|---|---|---|
| H dans AR | TiN | TiN | TiN |
| | 0,5-10 | 5-20 | 15-35 |
| H dans FM | SiC | SiC | SiC |
| | 0,5-10 | 3-12 | 5-15 |
| H dans AR | TiN | TiN | TiN |
| | 0,5-10 | 5-20 | 15-35 |
| H dans FM | Al₂O₃ | Al₂O₃ | Al₂O₃ |
| | 0,5-10 | 3-12 | 5-15 |
| H dans AR | TiN | TiN | TiN |
| | 0,5-10 | 5-20 | 15-35 |
| H dans FM | ZrO₂ | ZrO₂ | ZrO₂ |
| | 0,5-10 | 3-12 | 5-15 |
| H dans AR | TiN | TiN | TiN |
| | 0,5-10 | 5-20 | 15-35 |
| H dans FM | B4C | B₄C | B4C |
| | 0,5-10 | 3-12 | 5-15 |
| H dans AR | TiN | TiN | TiN |
| | 0,5-10 | 5-20 | 15-35 |
| H dans FM | c-BN | c-BN | c-BN |
| | 0,5-10 | 3-12 | 5-15 |
| H dans AR | TiN | TiN | TiN |
| | 0,5-10 | 5-20 | 15-35 |
| H dans FM | WC | WC | WC |
| | 0,5-10 | 3-12 | 5-15 |
**TABLEAU 1C**
| | | | |
|---|---|---|---|
| H dans AR | TiC | TiC | TiC |
| | 0,5-10 | 5-20 | 15-35 |
| H dans FM | SiC | SiC | SiC |
| | 1,0-10 | 3-12 | 5-15 |
| H dans AR | TiC | TiC | TiC |
| | 0,5-10 | 5-20 | 15-35 |
| H dans FM | Al₂O₃ | Al₂O₃ | Al₂O₃ |
| | 1,0-10 | 3-12 | 5-15 |
| H dans AR | TiC | TiC | TiC |
| | 0,5-10 | 5-20 | 15-35 |
| H dans FM | ZrO₂ | ZrO₂ | ZrO₂ |
| | 2-10 | 4-12 | 6-15 |
| H dans AR | TiC | TiC | TiC |
| | 0,5-10 | 5-20 | 15-35 |
| H dans FM | B₄C | B₄C | B₄C |
| | 1,0-10 | 3-12 | 5-15 |
| H dans AR | TiC | TiC | TiC |
| | 0,5-10 | 5-20 | 15-35 |
| H dans FM | c-BN | c-BN | c-BN |
| | 1,0-10 | 3-12 | 5-15 |
| H dans AR | TiC | TiC | TiC |
| | 0,5-10 | 5-20 | 15-35 |
| H dans FM | WC | WC | WC |
| | 1,0-10 | 3-12 | 5-15 |
**TABLEAU 1D**
| | | | |
|---|---|---|---|
| H dans AR | Al₂O₃ | Al₂O₃ | Al₂O₃ |
| | 0,5-10 | 5-20 | 15-35 |
| H dans FM | SiC | SiC | SiC |
| | 0,1-7 | 2-11 | 3-12 |
| H dans AR | Al₂O₃ | Al₂O₃ | Al₂O₃ |
| | 0,5-10 | 5-20 | 15-35 |
| H dans FM | Al₂O₃ | Al₂O₃ | Al₂O₃ |
| | 0,1-8 | 2-12 | 3-15 |
| H dans AR | Al₂O₃ | Al₂O₃ | Al₂O₃ |
| | 0,5-10 | 5-20 | 15-35 |
| H dans FM | ZrO₂ | ZrO₂ | ZrO₂ |
| | 0,5-10 | 2-12 | 5-15 |
| H dans AR | Al₂O₃ | Al₂O₃ | Al₂O₃ |
| | 0,5-10 | 5-20 | 15-35 |
| H dans FM | B₄C | B₄C | B₄C |
| | 0,1-8 | 2-12 | 3-15 |
| H dans AR | Al₂O₃ | Al₂O₃ | Al₂O₃ |
| | 0,5-10 | 5-20 | 15-35 |
| H dans FM | c-BN | c-BN | c-BN |
| | 0,1-8 | 2-12 | 3-15 |
| H dans AR | Al₂O₃ | Al₂O₃ | Al₂O₃ |
| | 0,5-10 | 5-20 | 15-35 |
| H dans FM | WC | WC | WC |
| | 0,1-7 | 2-11 | 3-12 |
**TABLEAU 1E**
| | | | |
|---|---|---|---|
| H dans AR | SiC | SiC | SiC |
| | 0,5-10 | 5-20 | 15-35 |
| H dans FM | SiC | SiC | SiC |
| | 0,1-8 | 2-12 | 3-15 |
| H dans AR | SiC | SiC | SiC |
| | 0,5-10 | 5-20 | 15-35 |
| H dans FM | Al₂O₃ | Al₂O₃ | Al₂O₃ |
| | 0,1-8 | 2-12 | 3-15 |
| H dans AR | SiC | SiC | SiC |
| | 0,5-10 | 5-20 | 15-35 |
| H dans FM | ZrO₂ | ZrO₂ | ZrO₂ |
| | 0,5-10 | 2-12 | 5-15 |
| H dans AR | SiC | SiC | SiC |
| | 0,5-10 | 5-20 | 15-35 |
| H dans FM | B4C | B₄C | B₄C |
| | 0,1-8 | 2-12 | 3-15 |
| H dans AR | SiC | SiC | SiC |
| | 0,5-10 | 5-20 | 15-35 |
| H dans FM | c-BN | c-BN | c-BN |
| | 0,1-8 | 2-12 | 3-15 |
| H dans AR | SiC | SiC | SiC |
| | 0,5-10 | 5-20 | 15-35 |
| H dans FM | WC | WC | WC |
| | 0,1-8 | 2-12 | 3-15 |
**TABLEAU 1F**
| | | | |
|---|---|---|---|
| H dans AR | ZrO₂-SiO₂ | ZrO₂-SiO₂ | ZrO₂-SiO₂ |
| | 0,5-10 | 5-20 | 15-35 |
| H dans FM | SiC | SiC | SiC |
| | 0,1-5 | 2-8 | 3-12 |
| H dans AR | ZrO₂-SiO₂ | ZrO₂-SiO₂ | ZrO₂-SiO₂ |
| | 0,5-10 | 5-20 | 15-35 |
| H dans FM | Al₂O₃ | Al₂O₃ | Al₂O₃ |
| | 0,1-5 | 2-8 | 3-12 |
| H dans AR | ZrO₂-SiO₂ | ZrO₂-SiO₂ | ZrO₂-SiO₂ |
| | 0,5-10 | 5-20 | 15-35 |
| H dans FM | ZrO₂ | ZrO₂ | ZrO₂ |
| | 0,1-8 | 2-12 | 3-15 |
| H dans AR | ZrO₂-SiO₂ | ZrO₂-SiO₂ | ZrO₂-SiO₂ |
| | 0,5-10 | 5-20 | 15-35 |
| H dans FM | B₄C | B₄C | B₄C |
| | 0,1-5 | 2-8 | 3-12 |
| H dans AR | ZrO₂-SiO₂ | ZrO₂-SiO₂ | ZrO₂-SiO₂ |
| | 0,5-10 | 5-20 | 15-35 |
| H dans FM | c-BN | c-BN | c-BN |
| | 0,1-5 | 2-8 | 3-12 |
| H dans AR | ZrO₂-SiO₂ | ZrO₂-SiO₂ | ZrO₂-SiO₂ |
| | 0,5-10 | 5-20 | 15-35 |
| H dans FM | WC | WC | WC |
| | 0,1-5 | 2-8 | 3-12 |

8. Appareil de freinage selon la revendication 7, où l'alliage d'aluminium est durci avec 15 à 25% en volume de SiC, et le matériau de friction contient un matériau dur sélectionné dans le groupe consistant en particules de SiC, Al₂O₃, et barbes de SiC.
